# FASCICULE DE BREVET EUROPEEN

(11) **EP 1 329 150 B1**
(45) Date de publication et mention de la délivrance du brevet: **12.09.2007**
(21) Numéro de dépôt: 03290108.4
(22) Date de dépôt: 15.01.2003
(51) Int. Cl.: A01C 11/02

(54) **Procédé de plantation de plants en mottes et module de plantation pour sa mise en oeuvre**
Verfahren zum Pflanzen von in Erdballen vorgezogenen Pflanzen und Pflanzeinheit zum Ausführen dieses Pflanzvorgangs
Method for transplanting seedlings in soil blocks and transplanting device therefore

(30) Priorité: 16.01.2002 FR 0200470
(43) Date de publication de la demande: 23.07.2003
(73) Titulaire: Regero, 44300 Nantes (FR)
(72) Inventeur: Pinson, Dominique, 44000 Nantes (FR)
(74) Mandataire: Michelet, Alain

(56) Documents cités:
- EP-A- 0 550 821
- EP-A- 0 596 841
- FR-A- 2 801 168

## Description

La présente invention concerne un procédé de plantation de plants en mottes. Elle concerne également le module de plantation permettant la mise en oeuvre du procédé et la machine équipée d'un ou de plusieurs de ces modules.

Ces modules de plantation sont constitués d'un couloir dans lequel un opérateur dispose des rangs de mottes et, à l'extrémité du couloir, on trouve un dispositif de mise en terre constitué de pinces, montées sur un arbre horizontal perpendiculaire au sens d'avancement du module.

Ce type de module est notamment décrit dans le document EP-0 475 839.

Les mottes dans lesquelles poussent les jeunes plants, sont constituées d'un substrat du genre terreau, compacté ; elles se présentent sous la forme de petits cubes dont les dimensions sont de l'ordre de 3 à 5 cm.

Ces mottes sont disposées dans un plateau qui en comporte au moins une centaine, et elles sont façonnées sous la forme de groupes de mottes en ligne, pour être plus facilement manipulables.

Les plants se développent dans les mottes et, selon la nature de ces plants, et aussi selon les conditions dans lesquelles ils se sont développés, on peut observer des adhérences au niveau des plans de jonction des mottes entre elles, sur un même groupe, du fait de la présence de radicelles qui migrent d'une motte à l'autre lors de leur développement.

Ces adhérences et cohésions sont une source fréquente d'incidents sur les modules de plantation et provoquent des ratés.

Pour remédier à ces problèmes, il a été proposé, dans le document FR-2 801 168, d'effectuer une opération de séparation des mottes avant de les prendre au moyen des pinces et de les mettre en terre.

La présente invention propose un procédé et un module de plantation qui permet d'améliorer les cadences de plantation en évitant les phénomènes de ratés, grâce à une séparation effective de la première motte située dans le couloir, par rapport à la seconde motte.

Le procédé de plantation selon l'invention concerne des plants en mottes qui sont disposés dans un couloir formant une rampe inclinée vers le sol, lesquels plants sont pris en charge à l'extrémité aval inférieure dudit couloir par un système de pinces qui dépose la motte dans un sillon ; ce procédé est caractérisé en ce qu'il consiste, après avoir pris en charge la première motte à l'extrémité inférieure aval dudit couloir par le système de pinces, à imprimer à cette motte, un mouvement de torsion qui permet de rompre et de briser les adhérences entre ladite première motte et la seconde motte retenue dans ledit couloir.

Le module de plantation permettant la mise en oeuvre du procédé selon l'invention comporte, rassemblés sur un même châssis :- un couloir d'amenée d'une rangée de mottes, qui se présente sous la forme d'une rampe inclinée vers le sol en allant de l'amont vers l'aval, - des moyens d'obturation de l'extrémité dudit couloir, en forme de butée escamotable, pour retenir lesdites mottes dans ledit couloir, - des moyens de prise en charge et de mise en terre de la première motte située à l'extrémité aval dudit couloir, en forme de pinces, - des moyens pour retenir par pincement les autres mottes dans ledit couloir, lors de l'enlèvement de ladite première motte, - des moyens pour faire avancer les mottes dans le couloir, en forme de tapis sans fin à avancement pas à pas, - des moyens de commande et de synchronisation des différents mouvements exécutés notamment par le tapis d'avancement, par ladite butée en bout dudit couloir, par lesdites pinces et par les moyens de pincement à l'extrémité dudit couloir, et ce module de plantation est caractérisé en ce que lesdits moyens de prise en charge et de mise en terre de la première motte, en forme de pinces, sont associés à des moyens qui impriment auxdites pinces, un mouvement de torsion pour réaliser dès la prise en charge de la première motte, une séparation de cette première motte par rapport à la deuxième motte qui est retenue à l'extrémité dudit couloir.

Selon une disposition préférentielle de l'invention, les moyens de prise en charge sont constitués de pinces montées sur un support qui est animé d'une part, d'un mouvement d'oscillation autour d'un axe horizontal transversal pour passer d'une position de prise en charge de la première motte à l'extrémité du couloir, à une position de largage de ladite première motte dans le sillon aménagé à cet effet, et d'autre part, d'un mouvement de torsion autour d'un pivot qui est perpendiculaire à l'axe d'oscillation et qui se situe dans le plan longitudinal et vertical médian du couloir et des mottes.

Toujours selon l'invention, le mouvement d'oscillation des pinces s'effectue au moyen d'un vérin interposé entre le châssis et la tête en forme de moyeu, sur laquelle est articulé et guidé le support desdites pinces.

Toujours selon l'invention, le mouvement de torsion imprimé aux pinces s'effectue au moyen d'un vérin interposé entre la tête d'oscillation et le support desdites pinces.

Selon une autre disposition de l'invention, le mouvement des pinces pour passer d'une position active de serrage de la motte à une position inactive pour le largage, est réalisé au moyen d'un vérin intégré au support, lesquelles pinces sont par exemple en forme de lames flexibles montées sur l'une des branches d'une équerre qui est articulée au niveau de son angle sur le support, et l'autre branche de ladite équerre est manoeuvrée par la tige dudit vérin.

Toujours selon l'invention, les pinces comportent des volets, ou joues, qui s'étendent du côté du couloir dans lequel sont situées les mottes, au niveau du feuillage des mottes, lesquels volets se referment légèrement au niveau de l'emplacement de la deuxième motte, pour effectuer une séparation des feuillages.

Toujours selon l'invention, le couloir comporte des parois qui remontent au niveau des feuillages des plants, encadrant quelques mottes dans la partie inférieure du couloir, et l'extrémité aval desdites parois, en forme de joue également, se resserre sur le feuillage à partir de la troisième motte.

L'invention concerne également la machine de plantation qui comporte plusieurs modules juxtaposés permettant de planter des mottes sur plusieurs lignes.

L'invention sera encore détaillée à l'aide de la description suivante et des dessins annexés donnés à titre indicatif, et dans lesquels :
- la figure 1 est une élévation schématique de la partie active du module de plantation selon l'invention ;
- la figure 2 est une vue de face du système de pinces ;
- la figure 3 montre les moyens qui permettent d'imprimer un mouvement de torsion aux pinces ;
- la figure 4 est une vue de dessus du couloir ;
- la figure 5 illustre schématiquement les différentes étapes de plantation des mottes, par le module selon l'invention.

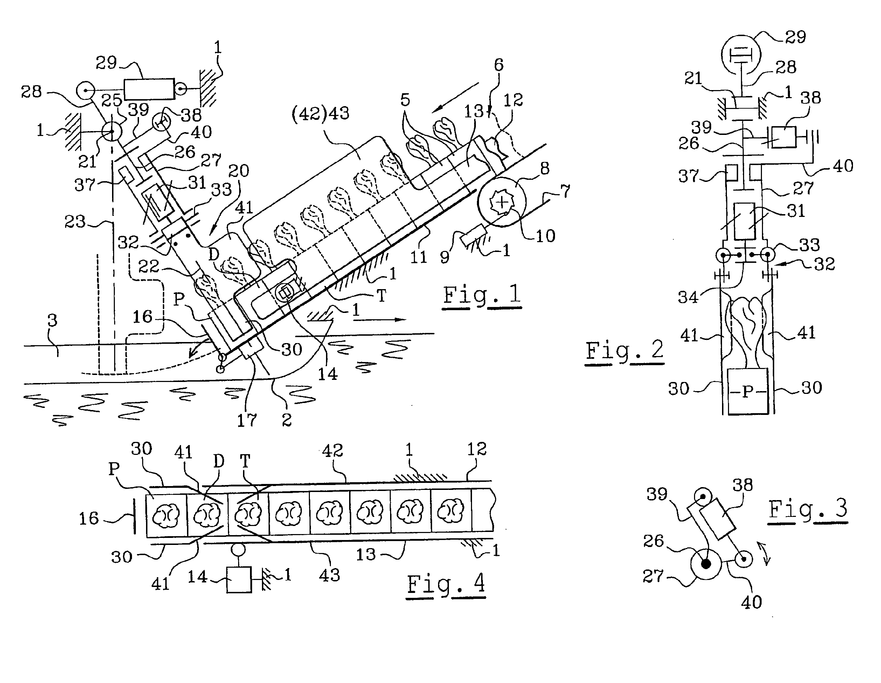

Comme représenté figure 1, le module de plantation comporte un châssis 1 qui apparaît en plusieurs endroits sous la forme de hachures. Ce châssis 1 comporte un soc 2 en forme de sabot qui ouvre un sillon 3 dans le sol.

Les mottes 5 sont placées dans un couloir 6 qui se présente sous la forme d'une rampe qui est inclinée vers le sol. Ce couloir est constitué, pour sa partie amont, d'un tapis transporteur 7 sans fin. Le tapis transporteur 7 s'étend entre une poulie supérieure non représentée et une poulie motrice 8 qui apparaît sur la figure 1. Cette poulie motrice 8 est entraînée au moyen d'un vérin 9 et d'une roue à rochets 10 coopérant avec un système à cliquet non représenté aménagé à l'extrémité de la tige du vérin 9. L'avancement des mottes 5 dans le couloir s'effectue pas à pas sous l'effet de moyens de commande et en particulier d'un automate approprié.

Le couloir 6 est constitué pour sa partie amont, de la bande transporteuse 7 et pour sa partie inférieure aval, d'une sole 11 solidaire du bâti 1 qui constitue le prolongement du brin supérieur de ladite bande 7, laquelle sole s'étend jusque dans le sillon 3, derrière la pointe du soc 2.

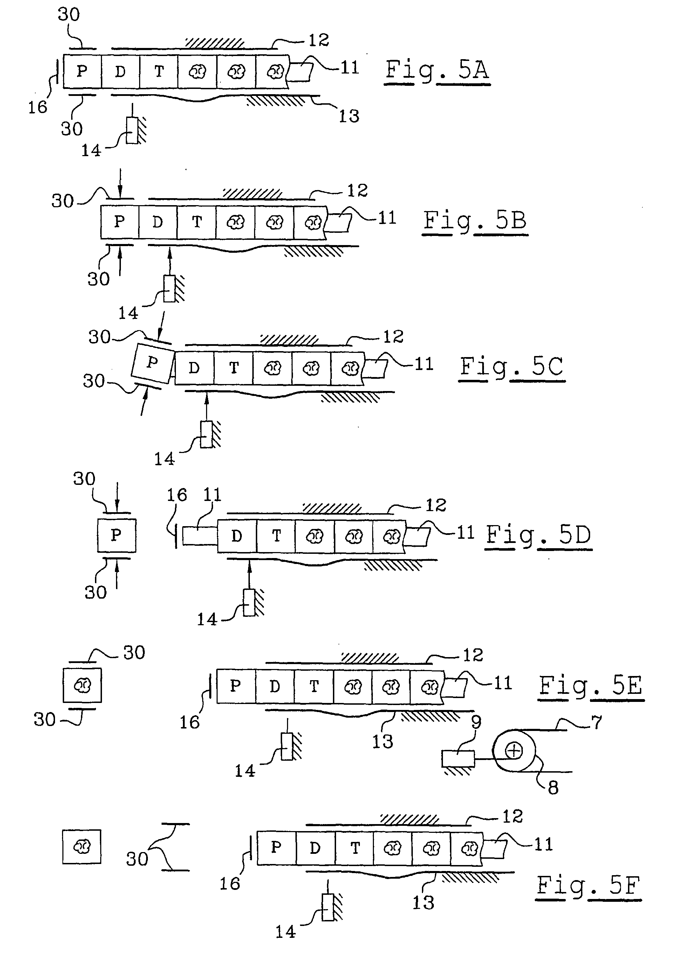

Latéralement, le couloir 6 est délimité par une paroi fixe 12 solidaire du bâti 1 comme représenté figure 4, et de l'autre côté par une paroi 13 qui est solidaire, dans sa partie amont, du châssis 1 et, à son extrémité inférieure, d'un vérin 14. Ce vérin 14, solidaire du bâti 1, permet de modifier l'ouverture du couloir 6 à sa partie inférieure aval, au niveau de la deuxième motte, de façon à pincer la rangée de mottes à partir de la deuxième motte comme il sera explicité plus loin en liaison avec la figure 5.

L'extrémité inférieure du couloir est obturée au moyen d'une butée 16 qui est escamotable. Cette butée est placée en position active comme représenté figure 1 ou en position inactive dans le prolongement de la sole 11, au moyen d'un vérin 17 qui est fixé sur le châssis 1 ou directement sous la sole 11.

Cette butée 16 permet de retenir les mottes disposées dans le couloir 6 et en particulier la première motte P. Cette première motte P est prise en charge et ensuite elle est déposée dans le sillon 3, par des moyens constitués d'un système de pinces 20. Ce système de pinces 20 est animé d'un mouvement d'oscillation autour d'un axe 21 qui est horizontal et perpendiculaire au sens d'avancement. Cet axe 21 se situe à l'intersection - de l'axe 22 qui est perpendiculaire à la sole 11 et qui passe par le centre de la première motte P, et - de l'axe vertical 23 qui correspond à l'axe de largage de ladite motte P dans le sillon 3.

L'axe 21 est solidaire du châssis 1 et il sert de guide à une tête 25 en forme de moyeu qui comporte d'un côté, vers le bas, un pivot 26 sur lequel est monté le support 27 du système de pinces 20 et, de l'autre côté, un bras 28 qui permet de manoeuvrer l'ensemble pour réaliser l'oscillation autour de l'axe 21, sous l'effet d'un vérin 29 ancré sur le châssis 1.

Le vérin 29 permet de faire passer le système de pinces 20 de la position de prise en charge de la motte P à l'extrémité du couloir 6, représenté en traits forts figure 1, à la position de largage de ladite motte P dans le sillon 3, comme représenté partiellement en traits mixtes fins.

Le système de pinces 20 est constitué de deux lames 30, disposées de part et d'autre de la motte P. Ces lames 30 sont manoeuvrées pour s'écarter à leur extrémité inférieure afin de larguer la motte P ou pour se resserrer sur la motte P à l'extrémité inférieure du couloir, au moyen d'un vérin 31 qui est logé et fixé dans le dispositif support 27.

Les lames 30 sont par exemple montées l'une et l'autre sur des pièces 32 en forme d'équerres. Ces pièces 32 sont chacune articulées au niveau de leur angle autour d'un axe 33 qui se situe dans un plan vertical longitudinal, et les lames 30 sont fixées chacune sur l'une des branches verticales de l'équerre correspondante et l'autre branche horizontale de l'équerre coopère avec l'extrémité 34 de la tige du vérin 31. Ce vérin 31 pousse ou tire sur les branches horizontales des équerres 32 soit pour écarter les lames 30, soit pour les rapprocher et serrer la motte P.

Le support 27 comporte un palier 37 à sa partie supérieure qui coopère avec le pivot 26, réalisant un guidage et une articulation qui permet d'effectuer un mouvement rapide de torsion dudit support 27 et du système de pinces 20, par rapport à la tête 25, lequel mouvement de torsion s'effectue sous la forme d'un pivotement aller-retour autour de l'axe 22 qui passe aussi par le pivot 26.

Le support 27 est manoeuvré au moyen d'un vérin 38. Ce vérin 38 est interposé entre une platine 39 solidaire de la tête 25 ou de la partie supérieure du pivot 26, et un bras 40 solidaire du support 27.

Le vérin 38 imprime un mouvement de torsion au système de pinces 20 et au support 27, avec un angle dont l'amplitude est de l'ordre de 15° environ.

Ce mouvement de torsion qui est réalisé dès la prise en charge de la première motte P par les lames 30, permet, avant l'évacuation de ladite motte P, de séparer cette motte P de la seconde motte D qui est pincée à l'extrémité du couloir 6, entre les parois 12 et 13.

Ce mouvement de torsion permet de casser les éventuelles racines ou radicelles, qui sont susceptibles de s'étendre d'une motte à l'autre.

On remarque, sur les figures, que le système de pinces 20 comporte des lames 30 qui sont munies, du côté du couloir 6, d'une sorte de volet 41 se situant au niveau du feuillage des plants. Ces volets ou joues 41 se referment légèrement sur le dessus des mottes, comme représenté figure 4, formant un dièdre avec les lames 30 et s'étendent jusqu'au niveau du feuillage de la seconde motte D.

On retrouve de la même façon, à la partie inférieure aval du couloir 6, des rebords supérieurs 42 et 43 qui s'étendent au-dessus des parois latérales 12 et 13, respectivement formant une sorte de couloir de guidage pour le feuillage des plants.

L'extrémité aval des rebords ou joues 42 se resserre légèrement au niveau de la troisième motte T comme représenté figure 4.

La figure 5 retrace les différentes étapes repérées A jusqu'à F, de la mise en terre des mottes. L'étape A montre les mottes dans le couloir 6. La butée d'extrémité 16 est en position active et les lames 30 du système de pinces sont en position pour prendre en charge la première motte P.

A cette étape A, le vérin 14 qui actionne la paroi 13 du couloir 6, est inactif.

L'étape B montre le serrage des lames 30 du système de pinces sur la première motte P et l'escamotage de la butée d'extrémité 16.

A cette étape B, le vérin 14 est activé en même temps que les lames 30, pour fermer le couloir 6, en pinçant la deuxième motte D au moins entre les parois 12 et 13.

L'étape C montre l'opération de séparation de la première motte P par rapport à la seconde motte D. Cette opération de séparation s'effectue au moyen d'un mouvement de torsion imprimé à la première motte P par les lames 30. Ce mouvement de torsion selon un angle dont l'amplitude est de l'ordre de 15°, provoque une cassure entre les mottes P et D et facilite leur séparation.

A l'étape C, le vérin 14 est toujours en action pour retenir les mottes entre les parois 12 et 13.

L'étape D montre l'enlèvement de l'ancienne première motte P par les lames 30 du système de pinces. On remarque à cette étape D la remise en position active de la butée 16 ; le vérin 14 retient toujours les mottes D et suivantes entre les parois 12 et 13 du couloir.

L'étape E montre la mise en position inactive du vérin 14 et l'activation du vérin 9 qui permet l'avancement des mottes dans le couloir, jusqu'à la butée 16. A cette même étape E, le système de pinces 20 est arrivé en fin de course et les lames 30 peuvent larguer la motte dans le sillon 3.

Ensuite, à l'étape F, les lames 30 du système de pinces reviennent vers l'extrémité du couloir pour se mettre en position active de prise en charge de la nouvelle première motte P comme représenté à l'étape A.

L'ensemble des mouvements réalisés par les vérins 9, 14, 17, 29, 31, 38 est géré par un automate approprié. Les différents vérins fonctionnent par exemple à l'air comprimé au moyen d'une centrale installée sur la machine, commune à plusieurs modules de plantation.

## Revendications

1. Procédé de plantation de plants en mottes disposés dans un couloir (6) formant une rampe inclinée vers le sol, lesquels plants sont pris en charge à l'extrémité aval inférieure dudit couloir par un système de pinces qui dépose la motte dans un sillon, **caractérisé en ce qu'**il consiste, après avoir pris en charge la première motte à l'extrémité inférieure aval dudit couloir par ledit système de pinces, à imprimer à cette motte, un mouvement de torsion qui permet de casser et de briser les adhérences entre ladite première motte et la seconde motte retenue dans ledit couloir (6).

2. Module de plantation de plants en mottes pour la mise en oeuvre du procédé selon la revendication 1, comprenant, rassemblés sur un même châssis (1) : - un couloir (6) d'amenée d'une rangée de mottes (5), formant une rampe inclinée vers le sol, - des moyens d'obturation de l'extrémité dudit couloir (3), en forme de butée escamotable (16) pour retenir lesdites mottes dans ledit couloir, - des moyens de prise en charge et de mise en terre de la première motte P à l'extrémité aval dudit couloir, en forme de pinces, - des moyens pour retenir par pincement les autres mottes dans ledit couloir, lors de l'enlèvement de ladite première motte P, - des moyens pour faire avancer les mottes dans le couloir (6), constitués d'un tapis transporteur sans fin (7) manoeuvré pas à pas, - des moyens de commande et de synchronisation des différents mouvements exécutés notamment par ledit tapis (7) d'avancement, par ladite butée (16), par lesdits moyens de prise en charge et de mise en terre, par lesdits moyens de pincement des mottes à l'extrémité dudit couloir, **caractérisé en ce que** lesdits moyens de prise en charge et de mise en terre, constitués d'un système de pinces (20), sont associés à des moyens qui impriment audit système de pinces, dès la prise en charge de la première motte P, un mouvement de torsion pour réaliser une séparation de cette première motte, par rapport à la seconde motte D qui est retenue à l'extrémité dudit couloir (6).

3. Module de plantation selon la revendication 2, **caractérisé en ce que** les moyens de prise en charge des mottes sont constitués de pinces (20) montées sur un support (27) qui est animé d'une part, d'un mouvement d'oscillation autour d'un axe (21) horizontal et transversal, pour passer d'une position de prise en charge de la première motte à une position de largage de cette motte, et d'autre part, d'un mouvement de torsion autour d'un pivot (26) qui est perpendiculaire audit axe d'oscillation (21) et qui se situe dans le plan médian du couloir (6).

4. Module de plantation selon la revendication 3, **caractérisé en ce qu**'il comporte un vérin (29) interposé entre le châssis (1) et la tête oscillante (25) en forme de moyeu, qui est munie du pivot (26) sur lequel est monté le support (27).

5. Module de plantation selon la revendication 4, **caractérisé en ce qu**'il comporte un vérin (38) interposé entre une platine (39) solidaire du pivot (26) et un bras (40) solidaire du support (27), pour réaliser le mouvement de torsion du système de pinces.

6. Module de plantation selon l'une quelconque des revendications 2 à 5, **caractérisé en ce qu**'il comporte un vérin (31) intégré au support (27), pour réaliser le mouvement d'ouverture et de fermeture des pinces (20).

7. Module de plantation selon la revendication 6, **caractérisé en ce que** les pinces sont en forme de lames (30) flexibles, montées sur l'une des branches de pièces (32) en forme d'équerre, lesquelles pièces (32) sont articulées au niveau de leur angle sur le support (27) et l'autre branche de l'équerre est manoeuvrée par le vérin (31), pour faire passer les lames (30) d'une position active de pincement et de prise en charge de la motte P à une position inactive de largage.

8. Module de plantation selon la revendication 7, **caractérisé en ce que** les lames (30) comportent, du côté du couloir (6), des volets (41) disposés au niveau du feuillage des plants, c'est-à-dire au-dessus du niveau supérieur des mottes (5), lesquels volets se referment légèrement sur le feuillage de la deuxième motte, formant un dièdre avec lesdites lames (30).

9. Module de plantation selon l'une quelconque des revendications 1 à 8, **caractérisé en ce que** le couloir comporte, au-dessus de ses parois latérales (12) et (13), des rebords (42, 43) respectivement, qui s'étendent sur plusieurs mottes au niveau du feuillage des plants, lesquels volets se resserrent à leur extrémité aval, sur le feuillage de la troisième motte.

10. Machine de plantation de plants en mottes, **caractérisée en ce qu**'elle comporte plusieurs modules selon l'une quelconque des revendications 2 à 9, lesquels modules sont juxtaposés, permettant de planter lesdites mottes simultanément sur plusieurs lignes.

## Claims

1. A method for transplanting seedlings in soil blocks arranged in a corridor (6) forming a ramp tilted towards the ground, which seedlings are grasped at the lower downstream end of said corridor by a system of grips which lays the soil block in a furrow, **characterised in that** it consists, after picking up the first soil block at the downstream lower end of said corridor by said system of grips, in imparting to said soil block, a twisting movement which enables to break and destroy the adhesions between said first soil block and the second soil block held in said corridor (6).

2. A transplanting module for seedlings in soil blocks for the implementation of the method according to claim 1, including, united on the same chassis (1) : - a corridor (6) for supplying a row of soil blocks (5), forming a ramp tilted towards the ground, - means for blanking the end of said corridor (3), in the form of a retractable stop (16) for maintaining said soil blocks in said corridor, - means for picking up and planting the first soil block P at the downstream end of said corridor, in the form of grips, - means for maintaining by pinching the other soil blocks in said corridor, when removing said first soil block P, - means for feeding the soil blocks in the corridor (6), formed of a endless conveyor belt (7) operated stepwise, - means for controlling and for synchronising the different movements performed in particular by said feeding conveyor belt (7), by said stop (16), by said picking up and planting means, by said means for pinching the soil blocks at the end of said corridor, **characterised in that** said picking up and planting means, formed of a system of grips (20), are associated with means which impart to said system of grips, as soon as the first soil block P has been picked up, a twisting movement to ensure separation of this first soil block, relative to the second soil block D which is held at the end of said corridor (6).

3. A transplanting module according to claim 2, **characterised in that** the means for picking up the soil blocks consist of grips (20) mounted on a support (27) which is driven on the one hand, by an oscillating movement around an axis (21) horizontal and transversal, to switch from a pick-up position of the first soil block to a dropping position of this soil block, and on the other hand, a twisting movement around a pivot pin (26) which is perpendicular to said axis of oscillation (21) and which is situated on the medial plane of the corridor (6).

4. A transplanting module according to claim 3, **characterised in that** it includes a jack (29) interposed between the chassis (1) and the oscillating head (25) in the form of a hub, which is fitted with the pivot pin (26) whereon is mounted the support (27).

5. A transplanting module according to claim 4, **characterised in that** it includes a jack (38) interposed between a mechanism plate (39) integral with the pivot pin (26) and an arm (40) integral with the support (27), to provide the twisting movement of the system of grips.

6. A transplanting module according to one any of claims 2 to 5, **characterised in that** it includes a jack (31) integrated to the support (27), to provide the opening and closing movement of the grips (20).

7. A transplanting module according to claim 6, **characterised in that** the grips are in the form of flexible blades (30), mounted on one of the legs of square-shaped parts (32), which parts (32) are hinged at their angle on the support (27) and the other leg of the square is operated by the jack (31), to switch the blades (30) from a pinching and picking up active position of the soil block P to a dropping inactive position.

8. A transplanting module according to claim 7, **characterised in that** the blades (30) comprise, on the corridor side (6), shutters (41) arranged at the foliage of the seedlings, i.e. above the upper level of the soil blocks (5), which shutters close slightly on the foliage of the second soil block, forming a dihedron with said blades (30).

9. A transplanting module according to any one of claims 1 to 8, **characterised in that** the corridor includes, above its lateral walls (12) and (13), rims (42, 43) respectively, extending over several soil blocks at the foliage of the seedlings, which shutters contract at their downstream end, on the foliage of the third soil block.

10. A machine for transplanting seedlings in soil blocks, **characterised in that** it includes several modules according to any one of claims 2 to 9, which modules are juxtaposed, enabling to plant said soil blocks simultaneously on several lines.

## Patentansprüche

1. Verfahren zum Pflanzen von Pflanzen in Erdballen, die in einem Gang (6) angeordnet sind, der eine schräge Rampe zu dem Boden hin bildet, wobei die Pflanzen an dem unteren stromabwärtigen Ende des Gangs von einem Zangensystem übernommen werden, das den Erdballen in einer Furche ablegt, **dadurch gekennzeichnet, dass** es darin besteht, nach dem Übernehmen des ersten Erdballens am unteren stromabwärtigen Ende des Gangs durch das Zangensystem diesem Erdballen eine Torsionsbewegung aufzuerlegen, die es erlaubt, die Haftungen zwischen dem ersten Erdballen und dem zweiten Erdballen, der in dem Gang (6) zurückgehalten ist, zu trennen und zu brechen.

2. Pflanzmodul für Pflanzen in Erdballen zum Umsetzen des Verfahrens nach Anspruch 1, das vereint auf einem gleichen Aufbau (1) Folgendes aufweist; - einen Gang (6) zum Zuführen einer Reihe von Erdballen (5), der eine schräge Rampe zu dem Boden hin bildet, - Verschlussmittel des Endes des Gangs (6) in Form eines einziehbaren Anschlags (16), um die Erdballen in dem Gang zurückzuhalten, - Mittel in Form von Zangen zum Übernehmen und Pflanzen in die Erde des ersten Erdballens P an dem stromabwärtigen Ende des Gangs. - Mittel zum Zurückhalten durch Einklemmen der anderen Erdballen in dem Gang beim Entfernen des ersten Erdballens P, - Mittel, um die Erdballen in dem Gang (6) vorwärts laufen zu lassen, die aus einem endlosen Förderband (7), das schrittweise manövriert wird, bestehen, - Mittel zum Steuern und Synchronisieren der verschiedenen Bewegungen, die insbesondere von dem Vorlaufförderband (7), dem Anschlag (16), den Übernahmemitteln und Mitteln zum Pflanzen in die Erde, den Mitteln zum Einklemmen der Erdballen an dem Ende des Gangs ausgeführt werden, **dadurch gekennzeichnet, dass** die Übernahmemittel und Mittel zum Pflanzen in die Erde, die aus einem Zangensystem (20) bestehen, mit Mitteln verbunden sind, die dem Zangensystem ab dem Übernehmen des ersten Erdballens P eine Torsionsbewegung auferlegen, um ein Trennen dieses ersten Erdballens von dem zweiten Erdballen D durchzuführen, der an dem Ende des Gangs (6) zurückgehalten wird,

3. Pflanzmodul nach Anspruch 2, **dadurch gekennzeichnet, dass** die Übernahmemittel der Erdballen aus Zangen (20) bestehen, die auf einen Träger (27) montiert sind, der einerseits von einer Oszillationsbewegung um eine Horizontal- und Querachse (21) zum Übergehen von einer Übernahmeposition des ersten Erdballens auf eine Abwurfposition dieses Erdballens, und andererseits von einer Torsionsbewegung um einen Zapfen (26), der senkrecht zu der Oszillationsachse (21) ist und sich in der mittleren Ebene des Gangs (6) befindet, anzutreiben.

4. Pflanzmodul nach Anspruch 3, **dadurch gekennzeichnet, dass** es einen Zylinder (29) aufweist, der zwischen dem Aufbau (1) und dem oszillierendem Kopf (25) in Nabenform eingefügt ist, der mit einem Zapfen (26) versehen ist, auf den der Träger (27) montiert ist.

5. Pflanzmodul nach Anspruch 4, **dadurch gekennzeichnet, dass** es einen Zylinder (38) aufweist, der zwischen eine Platte (39), die fest mit dem Zapfen (26) verbunden ist, und einen Arm (40), der fest mit dem Träger (27) verbunden ist, eingefügt ist, um die Torsionsbewegung des Zangensystems-auszuführen.

6. Pflanzmodul nach einem der Ansprüche 2 bis 5, **dadurch gekennzeichnet, dass** es in den Träger (27) eingebaut einen Zylinder (31) aufweist, um die Öffnungs- und Schließbewegung der Zangen (20) durchzuführen.

7. Pflanzmodul nach Anspruch 6, **dadurch gekennzeichnet, dass** die Zangen die Form biegsamer Klingen (30) haben, die auf einen der Zweige von Teilen (32) in Winkelelementform montiert sind, wobei die Teile (32) auf der Ebene ihres Winkels auf dem Träger (27) angelenkt sind und der andere Zweig des Winkelelements von dem Zylinder (31) gehandhabt wird, um die Klingen (30) von einer aktiven Einklemm- und Übernahmeposition des Erdballens P auf eine Inaktive Abwurfposition übergehen zu lassen.

8. Pflanzmodul nach Anspruch 7, **dadurch gekennzeichnet, dass** die Klingen (30) auf der Seite des Gangs (6) Klappen (41) aufweisen, die auf der Ebene der Blätter der Pflanzen angeordnet sind, das heißt über der oberen Ebene der Erdballen (5), wobei sich die Klappen leicht auf den Blättern des zweiten Erdballens, der mit den Klingen (30) ein Dieder bildet, schließen.

9. Pflanzmodul nach einem der Ansprüche 1 bis 8, **dadurch gekennzeichnet, dass** der Gang über seinen Seitenwänden (12) und (13) jeweils Ränder (42, 43) aufweist, die sich über mehrere Erdballen auf der Ebene der Blätter der Pflanzen erstrecken, wobei sich die Klappen an ihrem stromabwärtigen Ende auf den Blättern des dritten Erdballens verengen.

10. Pflanzmaschine für Pflanzen in Erdballen, **dadurch gekennzeichnet, dass** sie mehrere Module gemäß einem der Ansprüche 2 bis 9 aufweist, wobei die Module nebeneinander liegen und es erlauben, die Erdballen gleichzeitig auf mehreren Linien zu pflanzen.
